# EUROPEAN PATENT APPLICATION

(11) **EP 1 738 981 A1**
(43) Date of publication of application: **03.01.2007**
(21) Application number: 05720690.6
(22) Date of filing: 14.03.2005
(51) Int. Cl.: B60S 1/08

(54) **WIPER CONTROL METHOD**

(30) Priority: 31.03.2004 JP 2004102493
(71) Applicant: Mitsuba Corporation, Kiryu-shi, Gunma 376-8555 (JP)
(72) Inventor: IKEDA, Takeshi c/o MITSUBA Corporation, Kiryu-shi Gunma 3768555 (JP); KANO, Masami c/o MITSUBA Corporation, Kiryu-shi Gunma 3768555 (JP)
(74) Representative: HOFFMANN EITLE
(86) International application number: PCT/JP2005/004419
(87) International publication number: WO 2005/097569

(57) **Abstract**

[PROBLEMS] To ensure visibility of the driver by continuing operation of a wiper even upon failure of a sensor for a motor rotation pulse.

[MEANS FOR SOLVING PROBLEMS] A wiper arm is reciprocated for wiping by rotating a motor forward and reversely, and the operation of the wiper arm is controlled according to an absolute position signal outputted when the wiper arm exists at a predetermined position and a motor pulse outputted as the motor rotates. Input of the motor pulse is recognized (S32) . When an abnormality occurs in the motor pulse, the motor is rotated forward for a predetermined time at a constant duty (S33) . After a forward driving, the motor is rotated reversely for a predetermined time at a constant duty (S34). Consequently, the wiper arm continues reciprocal wiping operation even when a relative position signal is abnormal, thus ensuring visibility of the driver. Forward/reverse operation is continued for a predetermined time, and then the motor is stopped (S35,S36).

## Description

### Technical Field

The present invention relates to a method of controlling a wiper of a vehicle such as an automobile. More particularly, this invention relates to a method of controlling a wiper driven by a motor that is adapted to be driven to rotate both forwardly and reversely.

### Background Art

In the trend of reducing the space necessary for installing a wiper of a vehicle such as an automobile in recent years, systems for driving a wiper arm by means of a motor that is adapted to be driven to rotate both forwardly and reversely have been put to practical use in order to reduce the operating area of the link device arranged between the motor and the wiper arm to less than a half of the conventional operating area. With such a wiper system, it is necessary to switch the sense of rotation of the motor when the wiper arm gets to a turning point where the upwardly moving wiper arm is made to move downwardly or vice versa. Then, it is necessary to detect the position and the moving speed of the wiper arm in order to properly control the motor.

For example, in the system described in Patent Document 1, the position and the moving speed of wiper arm are detected by means of a motor rotation pulse that is generated by and interlocked with the rotation of the motor. In the system described in Patent Document 1, a motor rotation pulse is formed by a multi-pole-magnetized magnet fitted to the rotary shaft of the motor and a magnetic sensor such as a Hall IC arranged vis-à-vis the magnet. As the motor is driven to operate, the multi-pole-magnetized magnet rotates with the rotary shaft of the motor and the polarity of the magnetic pole located vis-à-vis the magnetic sensor changes accordingly. A pulse signal is output from the magnetic sensor each time when the polarity changes and the output signal is input to a control unit so as to be used as motor rotation pulse.

The position of the wiper arm is detected by means of additions and subtractions of numbers of pulses. However, since there is a risk of pulse shift when relying only on motor rotation pulses, an absolute position detecting sensor is added to the system and the pulse count is corrected by the output signal of the sensor. For example, a position detecting sensor is arranged near a turning point of the wiper arm and the pulse count is reset to a predetermined value when the output signal of the sensor is obtained in order to recognize the position of the wiper arm by the number of pulses counted from the absolute position. On the other hand, the moving speed of the wiper arm is determined from the cycle period of the motor rotation pulse. The cycle period of the motor rotation pulse and the moving speed of the wiper arm are correlated with each other so that the moving speed of the wiper arm is determined on the basis of the detected cycle period and the correlation that is determined in advance. Patent Document 1: Jpn. Pat. Appln. Laid-Open Publication No. 11-301409

### Disclosure of the Invention

### Problems to be Solved by the Invention

However, with a wiper system as described above, the control unit can no longer obtain the normal pulse when the sensor that outputs the motor rotation pulse and/or any of the peripheral circuits thereof goes wrong and/or noise enters the pulse. Then, it is no longer possible to computationally determine the position and the moving speed of the wiper arm on the basis of the motor rotation pulse and hence to operate the wiper arm normally so that the operation of the wiper needs to be stopped. If the absolute position detecting sensor fails but the sensor that outputs the motor rotation pulse operates normally, it is possible to control the wiper to a certain extent, although the turning point may be shifted to a slight extent. However, if the sensor for detecting the motor rotation pulse fails and the wiper is driven to operate forcibly, there arises a risk of damaging the wiper arm, the link and/or the motor so that the wiper needs to be stopped inevitably. The wiper is required to operate, if minimally, when it rains or snows in order to secure visibility for a driver if it goes out of order. Thus, there is a demand for measures for effectively dealing with a sensor of the type under consideration if it goes wrong.

Thus, it is the object of the present invention to make the wiper keep on operating and secure visibility for the driver when the motor rotation pulse sensor goes out of order.

### Means for Solving the Problems

In an aspect of the present invention, a wiper control method for driving a motor to rotate forwardly and reversely so as to reciprocate a wiper arm for a wiping operation and controlling the operation of the wiper arm according to an absolute position signal output when the wiper arm is located at a predetermined position and a relative position signal output as a function of the rotation of the motor, characterized in that the wiper arm is driven for a wiping operation according to the output condition of the absolute position signal and that of the relative position signal and the sense of rotation of the motor is reversed according to the absolute position signal when the relative position signal becomes abnormal.

Thus, according to the present invention, when the relative position signal becomes abnormal because it is not output or for some other reason and the absolute position signal is obtained, the sense of rotation of the motor is reversed according to the absolute position signal so that the wiper arm is reciprocated continuously for a wiping operation to secure visibility for a driver even when the relative position signal becomes abnormal.

In the wiper control method as defined above, it may be so arranged that an absolute position signal is output at a first reference position and at a second reference position arranged respectively near the upper turning point and near the lower turning point of the wiper arm and, when the relative position signal becomes abnormal, the sense of rotation of the motor is reversed according to the absolute position signal output at the first reference position and the absolute position signal output at the second reference position.

In the wiper control method as defined above, it may be so arranged that the sense of rotation is reversed when a predetermined time period has elapsed since the last acquisition of an absolute position signal or when an absolute position signal is acquired.

In another aspect of the present invention, there is provided a wiper control method for driving a motor to rotate forwardly and reversely so as to reciprocate a wiper arm between an upper turning point and a lower turning point for a wiping operation and controlling the operation of the wiper arm according to an absolute position signal output when the wiper arm is located at a predetermined position and a relative position signal output as a function of the rotation of the motor, characterized in that the wiper arm has a restriction means for mechanically restricting its operation at operation limiting positions arranged respectively beyond the upper turning point and beyond the lower turning point and the wiper arm is driven for a wiping operation according to the output condition of the absolute position signal and that of the relative position signal and the sense of rotation of the motor is reversed when the relative position signal becomes abnormal and the wiper arm is restricted by the restriction means.

Thus, according to the present invention, when the relative position signal becomes abnormal because it is not output or for some other reason, the sense of rotation of the motor is reversed when the wiper arm gets to one of the operation limiting positions where the operation of the wiper arm is mechanically restricted so that the wiper arm is reciprocated continuously for a wiping operation to secure visibility for the driver even when the relative position signal becomes abnormal.

In the wiper control method as defined above, it may be so arranged that the sense of rotation of the motor are reversed when the wiper arm gets to one of the operation limiting positions and the motor falls into a locked condition. Then, it may be so arranged that the motor is judged to be in a locked condition when the flow rate of the electric current being supplied to the motor exceeds a predetermined level.

In still another aspect of the present invention, there is provided a wiper control method for driving a motor to rotate forwardly and reversely so as to reciprocate a wiper arm for a wiping operation and controlling the operation of the wiper arm according to an absolute position signal output when the wiper arm is located at a predetermined position and a relative position signal output as a function of the rotation of the motor, characterized in that the wiper arm is driven for a wiping operation according to the output condition of the absolute position signal and that of the relative position signal and the motor is driven at a constant output and the sense of rotation of the motor is reversed in every predetermined time period when the relative position signal becomes abnormal.

Thus, according to the present invention, when the relative position signal becomes abnormal because it is not output or for some other reason, the motor is driven at a constant output and the sense of rotation of the motor is reversed in every predetermined time period so that the wiper arm is reciprocated continuously for a wiping operation to secure visibility for the driver even when the relative position signal becomes abnormal.

In still another aspect of the present invention, there is provided a wiper control method for driving a motor to rotate forwardly and reversely so as to reciprocate a wiper arm between an upper turning point and a lower turning point for a wiping operation and controlling the operation of the wiper arm according to an absolute position signal output when the wiper arm is located at a predetermined position and a relative position signal output as a function of the rotation of the motor, characterized in that the wiper arm is driven for a wiping operation according to the output condition of the absolute position signal and that of the relative position signal and the sense of rotation of the motor is reversed according to the absolute position signal when the relative position signal becomes abnormal and operation limiting positions are arranged respectively beyond the upper turning point and beyond the lower turning point so as to mechanically restrict the operation of the wiper arm and the sense of rotation of the motor is reversed when the absolute position signal becomes abnormal in addition to the relative position signal and the wiper arm gets to one of the operation limiting positions.

Thus, according to the present invention, the sense of rotation of the motor is reversed according to the absolute position signal when no relative position signal is output or the relative position signal becomes abnormal but an absolute position signal can be acquired. However, if the absolute position signal becomes abnormal in addition to the relative position signal, the sense of rotation of the motor is reversed when the wiper arm gets to one of the operation limiting positions for mechanically restricting the operation of the wiper arm. With this arrangement, the wiper arm is reciprocated continuously for a wiping operation when not only the relative position signal but also the absolute position signal becomes abnormal to secure visibility for a driver more reliably.

In the wiper control method as defined above, it may be so arranged that the motor is driven at a constant output and the sense of rotation of the motor is reversed in every predetermined time period when it is no longer possible to detect if the wiper arm gets to one of the operation limiting positions or not.

### Effects of the Invention

Thus, with a wiper control method of the present invention for driving a motor to rotate forwardly and reversely so as to reciprocate a wiper arm for a wiping operation and controlling the operation of the wiper arm according to an absolute position signal output when the wiper arm is located at a predetermined position and a relative position signal output as a function of the rotation of the motor, the sense of rotation of the motor is reversed according to the absolute position signal when the relative position signal becomes abnormal. Therefore, the wiper arm can be reciprocated continuously for a wiping operation to secure visibility for a driver even when the relative position signal becomes abnormal.

With a wiper control method of the present invention for driving a motor to rotate forwardly and reversely so as to reciprocate a wiper arm between an upper turning point and a lower turning point for a wiping operation and controlling the operation of the wiper arm according to an absolute position signal output when the wiper arm is located at a predetermined position and a relative position signal output as a function of the rotation of the motor, the sense of rotation of the motor is reversed when the relative position signal becomes abnormal and the wiper arm gets to one of the operation limiting positions where the operation of the wiper arm is mechanically restricted. Therefore, the wiper arm can be reciprocated continuously for a wiping operation to secure visibility for the driver even when the relative position signal becomes abnormal.

With a wiper control method of the present invention for driving a motor to rotate forwardly and reversely so as to reciprocate a wiper arm for a wiping operation and controlling the operation of the wiper arm according to an absolute position signal output when the wiper arm is located at a predetermined position and a relative position signal output as a function of the rotation of the motor, the motor is driven at a constant output and the sense of rotation of the motor is reversed in every predetermined time period when the relative position signal becomes abnormal. Therefore, the wiper arm can be reciprocated continuously for a wiping operation to secure visibility for the driver even when the relative position signal becomes abnormal.

With a wiper control method of the present invention for driving a motor to rotate forwardly and reversely so as to reciprocate a wiper arm between an upper turning point and a lower turning point for a wiping operation and controlling the operation of the wiper arm according to an absolute position signal output when the wiper arm is located at a predetermined position and a relative position signal output as a function of the rotation of the motor, the sense of rotation of the motor is reversed according to the absolute position signal when the relative position signal becomes abnormal and it is also reversed when the absolute position signal becomes abnormal in addition to the relative position signal and the wiper arm gets to one of the operation limiting positions for mechanically restricting the operation of the wiper arm. Therefore, the wiper arm can be reciprocated continuously for a wiping operation when not only the relative position signal but also the absolute position signal becomes abnormal to secure visibility for the driver more reliably.

### Brief Description of the Drawings

[FIG. 1] A schematic view of a motor unit comprising a motor to which Embodiment 1 of wiper control method according to the present invention is applicable.
[FIG. 2] A schematic illustration of the relationship between the magnet and the Hall ICs and the output signal (relative position signal) of the Hall ICs.
[FIG. 3] A schematic illustration of the operation range of the wiper arm.
[FIG. 4] A schematic illustration of the relationship between the Hall ICs and the ring magnet.
[FIG. 5] A flowchart of the processing sequence of the control method of Embodiment 1.
[FIG. 6] A schematic illustration of the mode of controlling the motor when Steps S4 and S5 of the processing operation in FIG. 5 are executed.
[FIG. 7] A flowchart of the processing sequence of Embodiment 2 of wiper control method according to the present invention.
[FIG. 8] A schematic illustration of the mode of controlling the motor when Steps S14 and S15 of the processing operation in FIG. 7 are executed.
[FIG. 9] A flowchart of the processing sequence of Embodiment 3 of wiper control method according to the present invention.
[FIG. 10] A schematic illustration of the mode of controlling the motor when Steps S33 and S34 of the processing operation in FIG. 9 are executed.
[FIG. 11] A flowchart of the processing sequence of Embodiment 4 of wiper control method according to the present invention.

### Explanation of Reference Symbols

- 1:: motor unit
- 2:: motor
- 3:: gear box
- 4:: rotary shaft
- 5:: output shaft
- 6:: yoke
- 7:: armature core
- 8:: commutator
- 9:: permanent magnet
- 10:: brush
- 11:: case frame
- 12:: worm
- 13:: worm gear
- 14:: first gear
- 15:: second gear
- 16:: multi-pole-magnetized magnet
- 17:: Hall IC
- 17A, 17B:: Hall IC
- 18:: ring magnet
- 19:: printed circuit board
- 20:: Hall IC
- 20A, 20B:: Hall IC

### Best Mode for Carrying Out the Invention

Now, Embodiments of the present invention will be described in greater detail by referring to the accompanying drawings.

### Embodiment 1

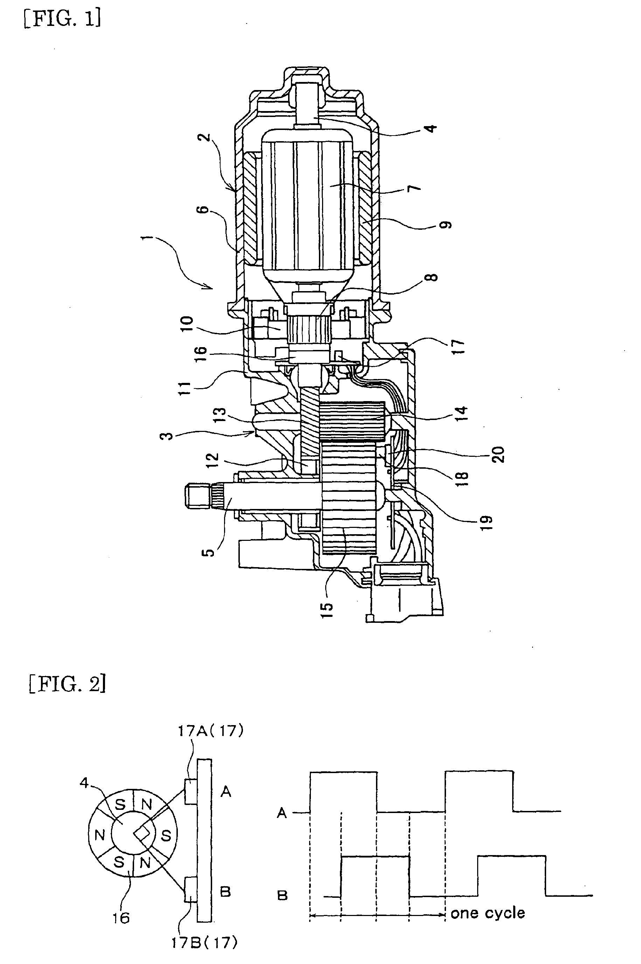

FIG. 1 is a schematic view of a motor unit comprising a motor to which Embodiment 1 of wiper control method according to the present invention is applicable. Referring to FIG. 1, the motor unit 1 is operated as drive source for driving either of a pair of opposite type wiper arms (to be referred to simply as arms hereinafter) disposed respectively in front of the driver's seat and the passenger seat. The motor unit 1 is switched to turn in the opposite sense when the corresponding arm gets to the upper or lower turning point.

The motor unit 1 comprises a motor 2 and a gear box 3. The number of revolutions per unit time of a rotary shaft 4 of the motor 2 is reduced in the gear box 3 before the rotary motion of the rotary shaft 4 is output to an output shaft 5. The rotary shaft 4 is rotatably supported by a bottomed cylindrical yoke 6 and an armature core 7, around which a coil is wound, and a commutator 8 are fitted to the rotary shaft 4. A plurality of permanent magnets 9 are rigidly fitted to the inner surface of the yoke 6. A feeding brush 10 is slidably held in contact with the commutator 8. The rotary speed (the number of revolutions per unit time) of the motor 2 is controlled by the flow rate of the electric current supplied to the brush 10.

The gear box 3 has a case frame 11 that is fitted to the edge of the open end of the yoke 6. The front end of the rotary shaft 4 projects out from the yoke 6 and contained in the case frame 11. A worm 12 is formed at the front end of the rotary shaft 4 and engaged with a worm gear 13 rotatably supported by the case frame 11. A first gear 14 that has a relatively small diameter is coaxially and integrally arranged on the worm gear 13. The first gear 14 is engaged with a second gear 15 that has a relatively large diameter. The output shaft 5 that is rotatably supported by the case frame 11 is integrally fitted to the second gear 15. Although not shown, another worm is formed on the rotary shaft 4 so as to be located adjacent to the worm 12 with winding directed opposite relative to that of the worm 12 and adapted to transmit its power to the second gear 15 by means of a reduction member similar to that of the worm gear 13 and that of the first gear 14.

The drive power of the motor 2 is output to the output shaft 5 in a reduced velocity condition by way of the worm 12, the worm gear 13, the first gear 14 and the second gear 15. The link mechanism (not shown) of a wiper is connected to the output shaft 5. As the motor 2 is operated, the link member, which is interlocked with other link members, is driven by way of the output shaft 5 to by turn operate the wiper arm.

A multi-pole-magnetized magnet 16 (to be referred to simply as magnet 16 hereinafter) is fitted to the rotary shaft 4. On the other hand, Hall ICs 17 (second sensors) are arranged vis-à-vis the outer periphery of the magnet 16 in the case frame 11. FIG. 2 is a schematic illustration of the relationship between the magnet 16 and the Hall ICs 17 and the output signal (motor pulse) of the Hall IC 17.

Referring to FIG. 2, two Hall ICs 17 (17A, 17B) are arranged at respective positions that form an angle of 90° relative to the center of the rotary shaft 4. The magnet 16 of the motor 2 is magnetized to show six poles so that a pulse output for six periods is obtained from each of the Hall ICs 17 when the rotary shaft 4 makes a full turn. Pulse signals having respective phases that are differentiated by 1/4 periods as shown at the right side in FIG. 2 are output from the Hall ICs 17A, 17B. Therefore, it is possible to find out the sense of rotation of the rotary shaft 4 by detecting the timing of appearance of each of the pulses from the Hall ICs 17A, 17B and hence possible to find out if the wiper is on the way of moving forward or moving backward.

It is possible to detect the rotary speed of the rotary shaft 4 from the period of the pulse output of either of the Hall ICs 17A, 17B. The number of revolutions per unit time of the rotary shaft 4 and the moving speed of the arm show a correlation that is based on the reduction ratio and the link operation ratio so that it is also possible to computationally determine the moving speed of the arm from the number of revolutions per unit time of the rotary shaft 4.

A ring magnet 18 for detecting the absolute position of the arm is fitted to the bottom surface of the second gear 15. A printed circuit board 19 is fitted to the frame case 11 and two Hall ICs 20 (20A, 20B) are arranged vis-à-vis the ring magnet 18 on the printed circuit board 19. As pointed out above, a crank arm is fitted to the second gear 15, which second gear 15 is adapted to rotate by about 180° to reciprocate the arm. As the second gear 15 rotates and the arm gets to a predefined reference position, the Hall ICs 20 are located vis-à-vis a magnetic pole (e.g. , N pole) of the ring magnet 18, when an absolute position signal is output to indicate the current position of the arm.

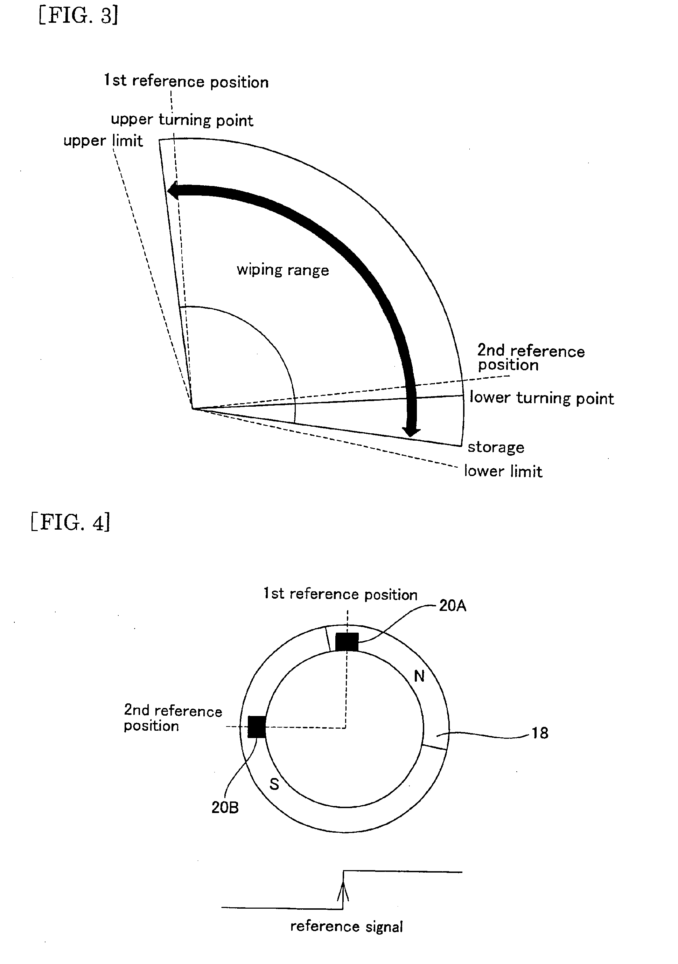

The arm is driven to swing between the upper turning point and the lower turning point to remove the rain drops or the snow flakes adhering to the windshield of a vehicle by the motor unit 1 having the above described configuration. FIG. 3 is a schematic illustration of the operation range of the wiper arm. During the wiping operation, the arm reciprocates in the wiping range between the upper turning point and the lower turning point indicated by solid lines in FIG. 3. When the wiper is at rest, the arm is moved to a storage position located below the lower turning point of the arm and stored in a storage section. The storage section is arranged in the inside of the bonnet of the vehicle (not shown).

An upper limit position (first operation limiting position) and a lower limit position (second operation limiting position) are provided for the arm respectively outside the upper and lower turning points. The upper and lower limit positions are defined by mechanical restriction means arranged in the motor unit 1. For example, a pin (not shown) may be arranged to project in the case frame 11 and a groove (not shown) may be arranged in the second gear 15 to contain the pin. The groove is cut to an extent that corresponds to the angle between the upper limit position and the lower limit position so that the pin moves in the groove in response to the rotary motion of the second gear 15. As the pin comes to either of the opposite ends of the groove, its movement is restricted to define the upper limit position or the lower limit position, whichever appropriate, of the arm.

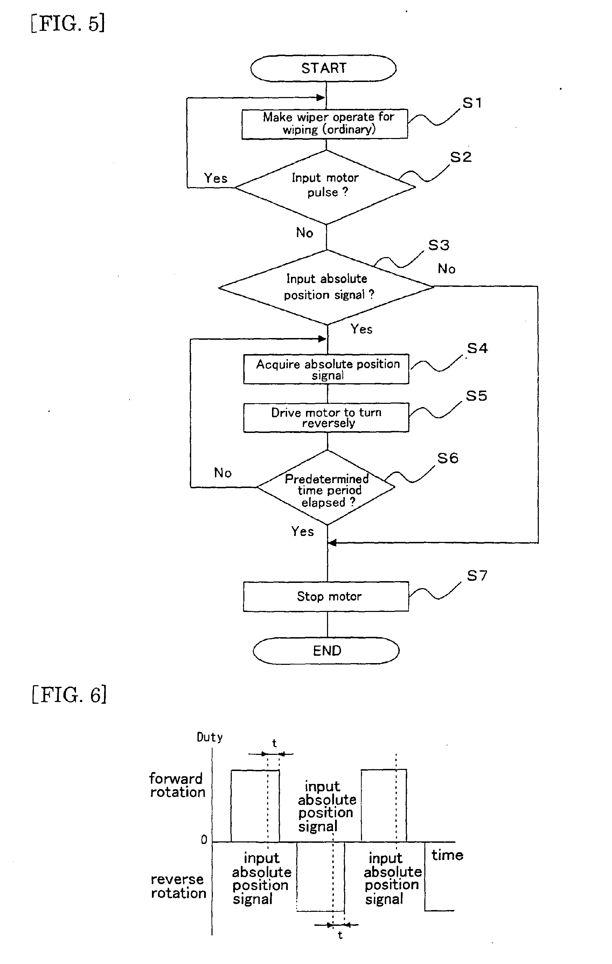

Two reference positions are arranged inside respectively near the upper and lower turning points. An absolute position signal is output at either of the two reference positions from the Hall IC 20A or 20B, whichever appropriate. The first reference position is located near the upper turning point, while the second reference position is located near the lower turning point. FIG. 4 is a schematic illustration of the relationship between the Hall ICs 20 and the ring magnet 18. Referring to FIG. 4, the ring magnet 18 has two poles. As the arm gets to either of the reference positions, the polarity of the ring magnet 18 located vis-à-vis the Hall IC 20A or 20B changes (N → S) and an absolute position signal is output from the Hall IC 20A or 20B, whichever appropriate. The position of the arm is then detected by means of the absolute position signal and the pulse signals (relative position signal) from the Hall ICs 17.

The output signal of the Hall IC 20A or 20B is used as absolute position signal indicating the absolute position of the arm. In other words, when an absolute position signal is acquired, the arm is judged to be passing either of the reference positions illustrated in FIG. 3. On the other hand, the motor pulses from the Hall ICs 17 are used as relative position signal. The motor pulses are output in proportion to the rotary angle of the rotary shaft 4 and the pulse count (cumulative value) corresponds to the rotary angle. Thus, it is possible to know the distance, or the angle, by which the arm has moved from one of the reference position by counting the motor pulses after the last acquisition of an absolute position signal.

The motor pulse count may go wrong while the arm is being operated because of a wiping failure or some other reason. In view of this possible problem, the system is designed to reset the motor pulse count when an absolute position signal is acquired. The reference positions are predefined positions and the pulse count is set to a predefined reference value at each of the reference positions. Then, the pulse count is reset to that value each time when an absolute position signal is acquired. With this arrangement, the pulse count is constantly corrected to the reference value at the reference positions and hence it is possible to prevent any dispersion of the controlled position of the arm from taking place due to a wrong pulse count.

On the other hand, when the motor pulses becomes abnormal, such as, no motor pulse is output because of a failure at either or both of the Hall ICs 17 and/or any of the peripheral circuits or normal motor pulses cannot be obtained due to noise or for some other reason, it is no longer possible to detect the arm position by means of the pulse count. Under such circumstances, the motor has to be stopped to prevent the system from being damaged with any of the conventional control methods. To the contrary, with a motor control method according to the present invention, when the motor pulses go wrong but absolute position signals can be normally acquired from the Hall ICs 20A, 20B, it is possible to continue the operation of the arm by using the acquired absolute position signals.

FIG. 5 is a flowchart of the processing sequence of the control method of Embodiment 1. Referring to FIG. 5, Step S1 is an ordinary control step. In Step S1, the arm position is detected by means of an absolute position signal and motor pulses and the motor is controlled for rotating forwardly and reversely so as to drive the wiper blade to reciprocate for a wiping operation. While an ordinary control step is being executed, the presence or absence of an input motor pulse is monitored in Step S2 and the ordinary control processing operation is continued if there is an input motor pulse (S1). If, on the other hand, there is not any input motor pulse, the processing operation proceeds to Step S3 for an abnormality process.

In Step S3, firstly, it is checked if there is an input absolute position signal or not. If there is not any input absolute position signal, not only the Hall IC 17 but also the Hall IC 20 may have failed. Therefore, the operation proceeds to Step S7, where the motor 2 is stopped to go out of the routine. If, on the other hand, it is found in Step S3 that there is an input absolute position signal, the processing operation proceeds to Step S4 to acquire the absolute position signal. After acquiring the absolute position signal, the processing operation proceeds to Step S5, where the motor 2 is driven to turn reversely.

FIG. 6 is a schematic illustration of the mode of controlling the motor when Steps S4 and S5 of the processing operation are executed. As shown in FIG. 3, the reference positions where an absolute position signal is output are located slightly inside the upper and lower turning points. Therefore, the motor 2 is driven to turn reversely when predetermined delay time t has elapsed since the acquisition of the absolute position signal. Thus, as a result, no motor pulse is obtained but the arm is made to reverse its moving direction substantially at the upper and lower turning points so that it is possible to continue the wiping operation without damaging the wiper. In other words, if the system of the Hall IC 17 fails, the wiping operation of the wiper is continued to secure visibility for the driver. Additionally, since the mode of wiper operation is not that of normal operation, the driver can be notified of the failure of the wiper.

While the wiper is driven to continue its operation in this control mode, this mode is an emergency control mode so that it is not desirable that the wiper keeps on operating in this control mode for a long stretch of time. Therefore, in the control processing sequence of FIG. 5, the motor 2 is stopped to secure the wiper when Steps S4 and S5 of the processing operation have been repeated for a predetermined time period (e.g., 10 minutes). More specifically, the duration of the processing operation at Steps S4 and S5 is checked in Step S6 and if it exceeds a predetermined time period, the processing operation proceeds to Step S7 to stop the motor 2. It may be so arranged that the driver is notified of the failure and that the wiper will stop its operation after 10 minutes at the start of Step S4.

While the motor 2 is driven to turn reversely when a predetermined delay time t has elapsed in the above-described control processing operation, it may alternatively be so arranged that the motor 2 is driven to turn reversely at the time when an absolute position signal is acquired. With such an arrangement, the wiper blade turns its moving direction at positions located slightly in the inside of the upper and lower turning points but the visibility of the driver is not significantly affected because the reference positions are not far from the upper and lower turning points respectively.

### Embodiment 2

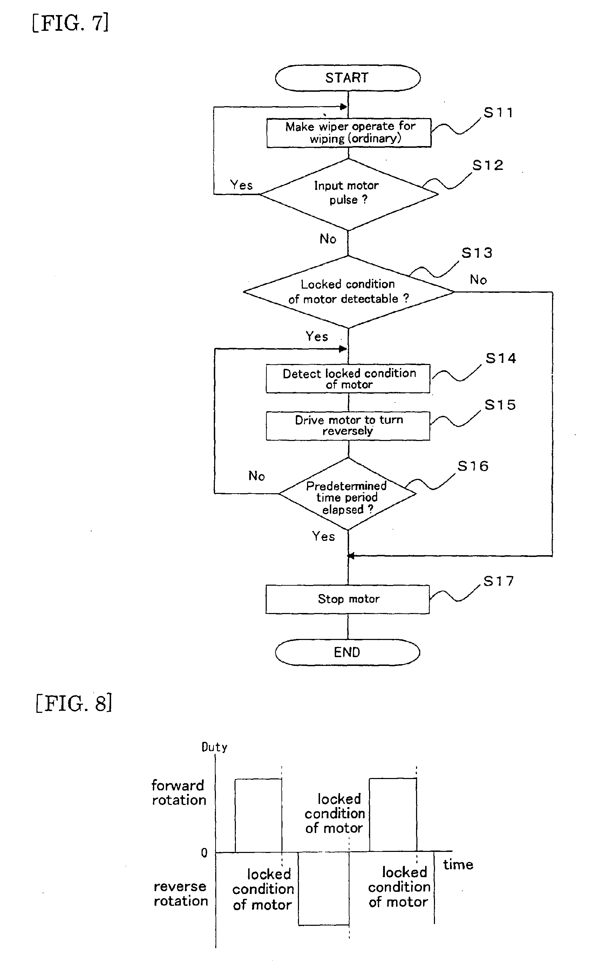

Now, Embodiment 2 of wiper control method according to the present invention will be described below. FIG. 7 is a flowchart of the processing sequence of Embodiment 2 of wiper control method. As in Embodiment 1, the control method of this embodiment is also executed at the motor unit 1 of FIG. 1. In the description of this embodiment and the following embodiments, the members and the parts that are the same as or similar to those of Embodiment 1 will be denoted by the same reference symbols and will not be described any further.

In Embodiment 2, again, Step S11 is an ordinary wiper control step. In Step S11, the arm position is detected by means of an absolute position signal and motor pulses and the motor is controlled for rotating forwardly and reversely so as to drive the wiper blade to reciprocate for a wiping operation. As in Embodiment 1, while an ordinary control step is being executed, the presence or absence of an input motor pulse is monitored in Step S12 and the ordinary control processing operation is continued if there is an input motor pulse (S11). If, on the other hand, there is not any input motor pulse, the processing operation proceeds to Step S13 for an abnormality process.

In Step S13, it is checked if the locked condition of the motor 2 can be detected or not. If there is no input motor pulse, it is not possible for the control unit side to recognize the current position of the arm and the arm will eventually get to the upper limit position or the lower limit position where its movement is restricted by the restriction means. At this time, the motor 2 falls in a locked condition and the flow of the electric current rapidly increases. Therefore, it is possible to detect the locked condition of the motor 2 and find out that the arm has reached the upper or lower limit position by monitoring the flow rate of the electric current that is being supplied.

Therefore, in Step S13, the motor 2 is driven to continue its operation for a predetermined time period that exceeds at least the time required for a one way wiping operation of the arm to see if a locked condition of the motor is detectable or not. If no locked condition of the motor is detectable, the electric current sensor or the like may also have failed. Therefore, the processing operation proceeds to Step S17, where the motor 2 is stopped to go out of the routine. If, on the other hand, a locked condition of the motor is detected in Step S13, the processing operation proceeds to Step S14, where the detection of the locked condition of the motor is reconfirmed, and then to Step S15, where the sense of rotation of the motor 2 is reversed.

FIG. 8 is a schematic illustration of the mode of controlling the motor when Steps S14 and S15 of the processing operation are executed. When a locked condition of the motor detected, the arm has already reached the upper or lower limit position. Therefore, in Step S15, the motor 2 is driven to turn reversely immediately after the detection of the locked condition as shown in FIG. 8. Thus, as a result, no motor pulse is obtained but the arm is made to reverse its moving direction substantially at the upper and lower turning points so that it is possible to continue the wiping operation without damaging the wiper. In other words, if the system of the Hall IC 17 fails, the wiping operation of the wiper is continued to secure visibility for the driver. Additionally, the driver can be notified of the failure as a result of the processing operation. Furthermore, with the processing operation of FIG. 7, the motor 2 is stopped to secure the wiper when Steps S14 and S15 of the processing operation have been repeated for a predetermined time period (Steps S16, S17).

### Embodiment 3

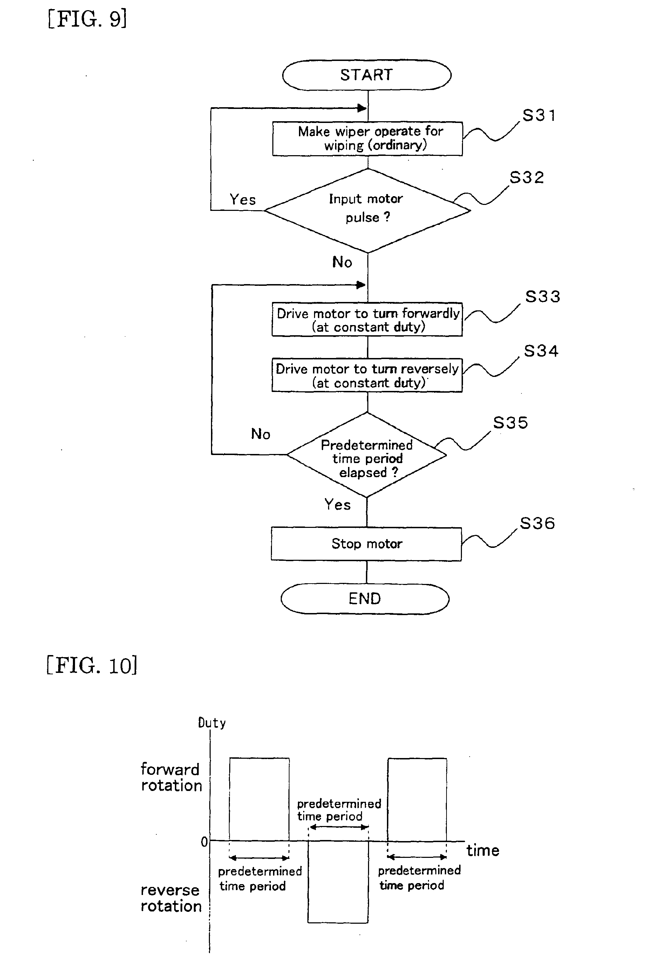

Now, Embodiment 3 of wiper control method according to the present invention will be described below. FIG. 9 is a flowchart of the processing sequence of Embodiment 3 of wiper control method. In Embodiment 3, again, Step S31 is an ordinary wiper control step. In Step S31, the arm position is detected by means of an absolute position signal and motor pulses and the motor is controlled for rotating forwardly and reversely so as to drive the wiper blade to reciprocate for a wiping operation. As in Embodiment 1, while an ordinary control step is being executed, the presence or absence of an input motor pulse is monitored in Step S32 and the ordinary control processing operation is continued if there is an input motor pulse (S31). If, on the other hand, there is not any input motor pulse, the processing operation proceeds to Step S33 for an abnormality process.

In Step S33, the motor 2 is driven to turn forwardly (e.g., in the direction of moving from the lower turning point toward the upper turning point) at a constant duty for a predetermined time period regardless of the current sense of rotation and the current position. The predetermined time period is set slightly longer than the time required for a one way wiping operation of the arm when the motor is driven to operate as that constant duty. As the motor 2 is driven in this way, the arm is driven to move to a position beyond the upper turning point as a result of Step S33 regardless of the current position of the arm. When, the arm fails somewhere on the way in the wiping region, the arm is moved to the upper limit position as a result of Step S33. In other words, the arm is moved to a position between the upper turning point and the upper limit position as a result of Step S33. When the arm gets to the upper limit position, the motor 2 falls in a locked condition but the locked condition is cancelled in a short period of time so that the motor 2 will be affected only little, if any.

After the forward turning operation in Step S33, the processing operation proceeds to Step S34, where the motor 2 is driven to turn reversely (in the direction of moving from the upper turning point toward the lower turning point to follow the above example) at a constant duty for a predetermined time period. Here again, the predetermined time period is set slightly longer than the time required for a one way wiping operation of the arm when the motor is driven to operate as that constant duty. As the motor 2 is driven in this way, the arm that was moved to a position between the upper turning point and the upper limit position in Step S33 is driven to a position located near the lower turning point.

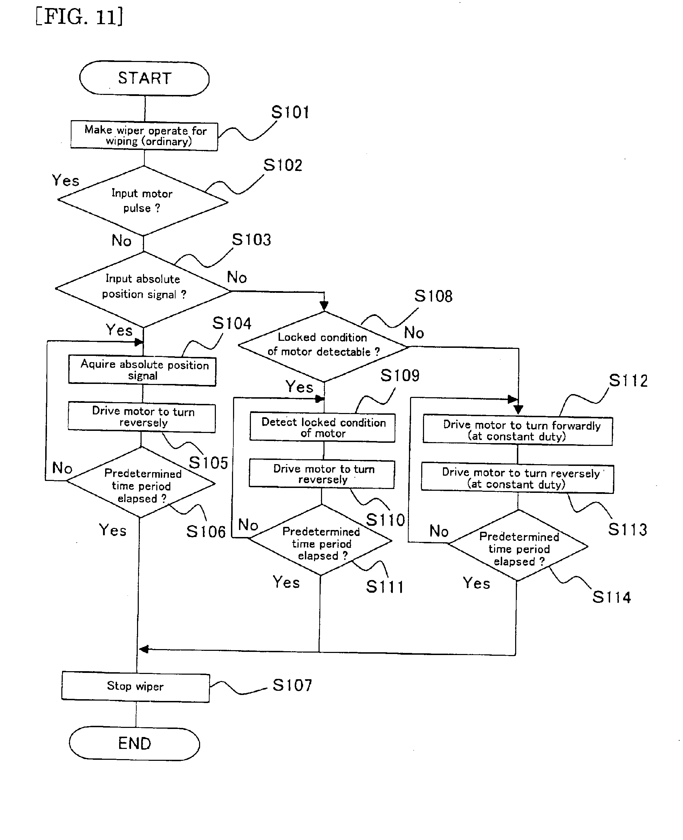

FIG. 10 is a schematic illustration of the mode of controlling the motor when Steps S33 and S34 of the processing operation are executed. As shown in FIG. 10, the motor 2 is driven to turn forwardly and reversely at a constant duty for a predetermined time period. Thus, as a result, no motor pulse is obtained but the arm is made to reverse its moving direction near the upper and lower turning points so that it is possible to continue the wiping operation without damaging the wiper. In other words, if the system of the Hall IC 17 fails, the wiping operation of the wiper is continued to secure visibility for the driver. Additionally, the driver can be notified of the failure as a result of the processing operation. Furthermore, with the processing operation of FIG. 9, the motor 2 is stopped to secure the wiper when Steps S33 and S34 of the processing operation have been repeated for a predetermined time period (Steps S35, S36).

### Embodiment 4

Now, Embodiment 4 of wiper control method according to the present invention will be described below. FIG. 11 is a flowchart of the processing sequence of Embodiment 4 of wiper control method. The control method of Embodiment 4 is realized by integrally combining the control processing operations of Embodiments 1 through 3 described above so as to be executed sequentially. Here again, Step S101 is an ordinary wiper control step. In Step S101, the arm position is detected by means of an absolute position signal and motor pulses and the motor is controlled for rotating forwardly and reversely so as to drive the wiper blade to reciprocate for a wiping operation. As in Embodiment 1, while an ordinary control step is being executed, the presence or absence of an input motor pulse is monitored in Step S102 and the ordinary control processing operation is continued if there is an input motor pulse (S101). If, on the other hand, there is not any input motor pulse, the processing operation proceeds to Step S103 for an abnormality process.

In Step S103, firstly, it is checked if there is an input absolute position signal or not. If it is found in Step S103 that there is an input absolute position signal, the processing operation proceeds to Step S104 to acquire the absolute position signal. After acquiring the absolute position signal, the processing operation proceeds to Step S105, where the motor 2 is driven to turn reversely. As a result, as in Embodiment 1, no motor pulse is obtained but the arm is made to reverse its moving direction substantially at the upper and lower turning points. Then, the motor 2 is stopped to secure the safety of the system after repeating Steps S104, S105 for a predetermined time period (Step S106, S107).

If, on the other hand, there is not any input absolute position signal in Step S103, the processing operation proceeds to Step S108, where it is checked if the locked condition of the motor 2 can be detected or not. If the locked condition of the motor is confirmed, the processing operation proceeds to Step S109, where the detection of the locked condition of the motor is reconfirmed, and then to Step S110, where the sense of rotation of the motor 2 is reversed. Thus, as a result, the arm is made to reverse its moving direction at the upper and lower limit positions. In this case again, Steps S109, S110 are repeated for a predetermined time period before the motor 2 is stopped (Steps S111, S107).

If it is not possible to detect a locked condition of the motor in Step S108, the processing operation proceeds to Step S112. In Step S112, the motor 2 is driven to turn forwardly at a constant duty for a predetermined time period regardless of the current sense of rotation and the current position. Then, as a result, the arm is moved to a position close to either the upper turning point or the lower turning point. After the forward driving operation in Step S112, the processing operation proceeds to Step S113, where the motor 2 is driven to turn reversely at a constant duty for a predetermined time period. Thus, as a result, the arm that has been moved to a position close to one of the turning points in Step S112 is moved to a position close to the other turning point. Consequently, the arm reverses its moving direction at positions close to the upper and lower turning points. Then, Steps S112, S113 are repeated for a predetermined time period before the motor 2 is stopped (Steps S114, S107).

In this way, with the control process of FIG. 11, if no motor pulse is obtained it is firstly attempted to control the motor by using an absolute position signal and, if the attempt is not successful, it is then attempted to control the motor by detecting a locked condition of the motor. If the attempt is not successful, the wiper is driven to operate continuously by forcibly driving the motor forwardly and reversely. In these cases, the accuracy of position control of the arm falls in the order of absolute position signal → locked condition of motor → forcibly driving motor forwardly and reversely. In short, if the system of the Hall IC 17 fails to make it no longer possible to obtain motor pulses with the control method of Embodiment 4, the feasibility of the abnormality process that shows a higher level of accuracy is judged so as to make the wiper continue its wiping operation in a condition closer to the normal operating condition in order to secure visibility for the driver. Additionally, the driver can be notified of the failure as a result of execution of the process.

The present invention is not limited to the embodiment described above and, needless to say, can be variously modified without deviating from the scope of the subject matter of the invention.
For example, Steps S4, S5, Steps S14, S15, Steps S33, S34 Steps S104, S105, Steps S109, S110, Steps S112, S113 are repeated for a predetermined time period before the motor is stopped in the above-described embodiments. However, it is not necessary to stop the motor after the elapse of a predetermined time period.
Alternatively, it may be so arranged that the abnormality process is continued until the driver turns off the wiper switch and/or the ignition switch. When the wiper switch or the like is turned off and turned on again subsequently, it is checked once again if there is an input motor pulse or not (Step S1 and so on) and any of the above-described processes will be executed.

The control processes of Embodiments 1 through 3 are combined for use in the above-described control mode of Embodiment 4. However, the control processes of two of Embodiments 1 through 3 may alternatively be combined for use in the above-described control mode of Embodiment 4. For example, combinations of Embodiments 1 and 2, Embodiments 1 and 3 and Embodiments 2 and 3 may possibly be used for Embodiment 4. The sequence of execution of the control processes is not limited to 1 → 2 → 3, although the sequence of 1 → 2 → 3 will be preferable from the viewpoint of accuracy of control.

While the control method of the present invention is applied to a wiper having a storage position located below the lower turning point in the above description of the embodiments, the present invention is also applicable to wipers having no storage position. The control method of the present invention is applicable not only to wipers where the wiper arms at the driver' s seat and the passenger seat are driven individually by separate motors but also to wipers where the two wiper arms are driven to operate by a single motor and a single link mechanism. Additionally, the control method of the present invention is applicable not only to wipers where the wiper arms are driven in opposite directions for a wiping operation but also wipers where the wiper arms are driven in parallel for a wiping operation.

While Hall ICs are used as a means for detecting the rotary condition and the rotary position of the motor in each of the above described embodiments, the detection means of the present invention is not limited to Hall ICs and sensors using infrared rays or MR sensors (magnetoresistive effect element) may alternatively be used.

## Claims

1. A wiper control method for driving a motor to rotate forwardly and reversely so as to reciprocate a wiper arm for a wiping operation and controlling the operation of the wiper arm according to an absolute position signal output when the wiper arm is located at a predetermined position and a relative position signal output as a function of the rotation of the motor, **characterized in that**
the wiper arm is driven for a wiping operation according to the output condition of the absolute position signal and that of the relative position signal; and
the sense of rotation of the motor is reversed according to the absolute position signal when the relative position signal becomes abnormal.

2. The method according to claim 1, **characterized in that**
an absolute position signal is output at a first reference position and at a second reference position arranged respectively near the upper turning point and near the lower turning point of the wiper arm and, when the relative position signal becomes abnormal, the sense of rotation of the motor is reversed according to the absolute position signal output at the first reference position and the absolute position signal output at the second reference position.

3. The method according to claim 1 or 2, **characterized in that**
the sense of rotation is reversed when a predetermined time period has elapsed since the last acquisition of an absolute position signal.

4. The method according to claim 1 or 2, **characterized in that**
the sense of rotation is reversed when an absolute position signal is acquired.

5. A wiper control method for driving a motor to rotate forwardly and reversely so as to reciprocate a wiper arm between an upper turning point and a lower turning point for a wiping operation and controlling the operation of the wiper arm according to an absolute position signal output when the wiper arm is located at a predetermined position and a relative position signal output as a function of the rotation of the motor, **characterized in that**
the wiper arm has restriction means for mechanically restricting its operation at operation limiting positions arranged respectively beyond the upper turning point and beyond the lower turning point;
the wiper arm is driven for a wiping operation according to the output condition of the absolute position signal and that of the relative position signal; and
the sense of rotation of the motor is reversed when the relative position signal becomes abnormal and the wiper arm is restricted by the restriction means.

6. The method according to claim 5, **characterized in that**
the sense of rotation of the motor is reversed when the wiper arm gets to one of the operation limiting positions and the motor falls into a locked condition.

7. The method according to claim 6, **characterized in that**
the motor is judged to be in a locked condition when the flow rate of the electric current being supplied to the motor exceeds a predetermined level.

8. A wiper control method for driving a motor to rotate forwardly and reversely so as to reciprocate a wiper arm for a wiping operation and controlling the operation of the wiper arm according to an absolute position signal output when the wiper arm is located at a predetermined position and a relative position signal output as a function of the rotation of the motor, **characterized in that**
the wiper arm is driven for a wiping operation according to the output condition of the absolute position signal and that of the relative position signal; and
the motor is driven at a constant output and the sense of rotation of the motor is reversed in every predetermined time period when the relative position signal becomes abnormal.

9. A wiper control method for driving a motor to rotate forwardly and reversely so as to reciprocate a wiper arm between an upper turning point and a lower turning point for a wiping operation and controlling the operation of the wiper arm according to an absolute position signal output when the wiper arm is located at a predetermined position and a relative position signal output as a function of the rotation of the motor, **characterized in that**
the wiper arm is driven for a wiping operation according to the output condition of the absolute position signal and that of the relative position signal;
the sense of rotation of the motor is reversed according to the absolute position signal when the relative position signal becomes abnormal; and
operation limiting positions are arranged respectively beyond the upper turning point and beyond the lower turning point so as to mechanically restrict the operation of the wiper arm and the sense of rotation of the motor is reversed when the absolute position signal becomes abnormal in addition to the relative position signal and the wiper arm gets to one of the operation limiting positions.

10. The method according to claim 9, **characterized in that**,
if it is not possible to detect that the wiper arm has reached one of the operation limiting positions, the motor is driven at a constant output and the sense of rotation of the motor is reversed in every predetermined time period.
